## Europäisches Patentamt

## European Patent Office

## Office européen des brevets

(19)

(11) Veröffentlichungsnummer: **0 218 738**
**B1**

(12) **EUROPÄISCHE PATENTSCHRIFT**

(45) Veröffentlichungstag der Patentschrift:
**10.01.90**

(51) Int. Cl.⁴: **D21B 1/30**

(21) Anmeldenummer: **85112951.0**

(22) Anmeldetag: **12.10.85**

(54) **Verfahren zum Auflösen von Fasermaterial, insbesondere von gemischtem Altpapier, sowie Trommel zur Durchführung eines derartigen Verfahrens.**

(43) Veröffentlichungstag der Anmeldung:
**22.04.87 Patentblatt 87/17**

(45) Bekanntmachung des Hinweises auf die Patenterteilung:
**10.01.90 Patentblatt 90/2**

(84) Benannte Vertragsstaaten:
**AT BE DE FR GB IT NL SE**

(56) Entgegenhaltungen:
**US-A- 1 759 385**

(73) Patentinhaber: **Hermann Finckh Maschinenfabrik GmbH & Co., Marktstrasse 185, D-7417 Pfullingen(DE)**

(72) Erfinder: **Holz, Emil, Metzinger Strasse 51, D-7412 Eningen(DE)**

(74) Vertreter: **Hoeger, Stellrecht & Partner, Uhlandstrasse 14 c, D-7000 Stuttgart 1(DE)**

ACTORUM AG

## Beschreibung

Die Erfindung betrifft ein Verfahren zum Auflösen von Fasermaterial, insbesondere von gemischtem Altpapier, in einer sich mit liegender Achse drehenden Trommel, der das aufzulösende Fasermaterial durch eine in einer ersten Trommelstirnwand angeordnete Beschickungsöffnung zugeführt und dann in einem Auflöseabschnitt der Trommel in dieser zusammen mit Auflöseflüssigkeit durch einem geschlossenen Trommelmantel benachbarte Mitnehmerelemente der Trommel in deren aufsteigendem Bereich periodisch angehoben und dadurch mit der Auflöseflüssigkeit gemischt und aufgelöst wird, worauf eine Fasersuspension und nicht-aufgelöstes Material durch eine in der zweiten Trommelstirnwand angeordnete Auslaßöffnung aus der Trommel abgeführt werden. Ferner betrifft die Erfindung eine Trommel zur Durchführung eines solchen Verfahrens, mit einer um eine liegende Achse drehbar gelagerten Trommel mit einer Beschickungsöffnung in einer ersten und einer Auslaßöffnung in einer zweiten Stirnwand sowie einem zumindest in einem der Beschickungsöffnung benachbarten axialen Trommelabschnitt geschlossenen Trommelmantel, an dessen Innenseite Mitnehmerelemente zum Anheben des Fasermaterials angeordnet sind.

Die Firma Hermann Finckh Maschinenfabrik GmbH & Co., D-7417 Pfullingen, bietet bereits eine Anlage zum Auflösen von gemischtem Altpapier an, die hintereinander eine Einweich- und Auflösetrommel, eine Mischvorrichtung sowie eine Sortiertrommel umfaßt. Die Einweich- und Auflösetrommel besitzt bis auf eine Beschickungs- und eine Auslaßöffnung geschlossene Stirnwände sowie einen geschlossenen Trommelmantel, an dessen Innenseite Mitnehmerelemente angeordnet sind, welche die Form von sich ungefähr in Trommellängsrichtung erstreckenden und in radialer Richtung in das Trommelinnere hinein vorspringenden Rippen nach Art eines schmalen Rechtecks aufweisen. Die liegend angeordnete Trommelachse besitzt ein geringfügiges Gefälle in Richtung zur Auslaßöffnung, wobei die Größe dieses Gefälles mitbestimmend ist für die Aufenthaltszeit des Fasermaterials in der Einweich- und Auflösetrommel. In der sich drehenden Trommel wird das Fasermaterial zunächst mit der Auflöseflüssigkeit durchmischt und dann im wesentlichen durch Reib- und Scherkräfte aufgelöst; die letzteren ergeben sich dadurch, daß der zu behandelnde Stoff durch die Mitnehmerrippen immer wieder angehoben wird, worauf der angehobene Stoff auf dem mit den Mitnehmerrippen aufsteigenden Stoff wieder herabströmt bzw. -gleitet, jedenfalls dann, wenn der Füllgrad der Einweich- und Auflösetrommel so eingestellt wird, daß der mit den Mitnehmerrippen aufsteigende Stoff zumindest den Raum zwischen den in diesem Teil des Stoffs befindlichen Mitnehmerrippen ausfüllt. In der Mischvorrichtung werden der in der Einweich- und Auflösetrommel erzeugte Faserbrei sowie nicht aufgelöstes Material mit Wasser verdünnt und vermischt, worauf dieses Gemisch in die Sortiertrommel gelangt, die sich von der Einweichtrommel im wesentlichen nur dadurch unterscheidet, daß sie einen mit Sieböffnungen versehenen Trommelmantel aufweist, der dazu dient, eine Fasersuspension vom sog. Spuckstoff, d.h. nicht-aufgelöstem und nicht-auflösbarem Material, zu trennen.

Dieses System, bei dem die Auflösung des Fasermaterials vorwiegend durch Reib- und Scherkräfte der sich auf- und abwärts bewegenden Materialströme bewirkt wird, ist viel vorteilhafter als das gleichfalls bekannte Auflösen von Fasermaterial in einer um eine liegende Achse rotierenden Auflöseund Sortiertrommel mit Siebmantel (DE-PS 2 547 896), die so betrieben werden soll, daß das durch Mitnehmerrippen dieser Trommel angehobene Fasermaterial vom oberen Trommelbereich herabfällt und auf den Trommelboden aufschlägt; zum einen ist die Auflösewirkung dieses zweiten bekannten Systems äußerst ungenügend, zum zweiten werden in dem an erster Stelle geschilderten bekannten System nicht-faserige Bestandteile des Altpapiers weniger zerkleinert und lassen sich deshalb leichter abtrennen, und schließlich ermöglicht das erste System ein wirksames Verdünnen des in der Einweichund Auflösetrommel hergestellten Faserbreis sowie ein wirksames Durchmischen des aus dieser Trommel abgeführten Materials mit Wasser, ehe es dem Sortiervorgang unterworfen wird, so daß das erste System in der Sortiertrommel brauchbare Fasern sehr viel vollständiger abscheidet als das an zweiter Stelle geschilderte bekannte System, bei dem sich große Schwierigkeiten dabei ergeben, nach dem angestrebten Auflösen, aber vor dem Sortieren dem zu sortierenden Material ausreichende Mengen Wassers zuzuführen.

Nachteilig ist schließlich auch noch ein drittes bekanntes System (US-PS 1 831 642) mit einer sich um eine liegende Achse drehenden Einweich-, Auflöseund Sortiertrommel, die in ihrer vorderen Stirnwand eine Beschickungsöffnung aufweist, deren hintere Stirnwand jedoch geschlossen und deren Mantel als Siebblech ausgebildet ist. Diese Trommel taucht etwa zur Hälfte in einen wannenförmigen Tank ein, aus dem sich bei dem Sortiervorgang ergebende Fasersuspension abgeleitet wird. Sich an den Trommelmantel anschließende, in radialer Richtung in das Trommelinnere hinein vorspringende Rippen sind nach Art eines Sägeblatts mit gezahnten Innenlängskanten ausgebildet und sollen beim Umlaufen der knapp halbgefüllten Trommel das aufzulösende Fasermaterial zerkleinern – es erfolgt also eine Art Zerreißen des Fasermaterials.

Im wesentlichen nach demselben Prinzip arbeitet ein weiteres bekanntes System (US-PS 1 759 385) mit einer sich um eine liegende Achse drehenden Einweich-, Auflöse- und Sortiertrommel, die in ihrer vorderen Stirnwand eine Beschickungsöffnung und in ihrer hinteren Stirnwand ein Sieb aufweist und deren Mantel geschlossen, d.h. nicht mit Sieböffnungen versehen ist. Auch diese Trommel besitzt an der Innenseite des Trommelmantels befestigte, sich in Richtung der Trommelachse erstreckende Rippen, die nach Art eines Sägeblatts mit einer gezahnten Innenlängskante versehen sind.

Auch mit dieser bekannten Trommel soll das Fasermaterial sowohl aufgelöst als auch das aufgelöste Fasermaterial sortiert werden – der sogenannte Gutstoff, d.h. die brauchbaren Fasern, passiert die Öffnungen des am auslaßseitigen Trommelende befindlichen Siebs, während der sogenannte Spuckstoff, d.h. nicht-aufgelöstes Fasermaterial und andere Rückstände, in der Trommel verbleiben, so daß mit einer Stoffdichte gearbeitet werden muß, die entweder für das Auflösen oder für das Sortieren nicht optimal ist. Bilden die an der Innenseite der Trommelwand angebrachten Rippen oder Leisten Taschen, so soll durch diese das Fasermaterial angehoben und fallengelassen werden (siehe Seite 2, Zeilen 16 bis 20 der US-A 1 759 385). Auch auf dieses bekannte Auflöseverfahren treffen also alle diejenigen Nachteile zu, die vorstehend bezüglich des Standes der Technik nach der DE-PS 2 547 896 aufgeführt wurden, nämlich ungenügende Auflösewirkung und unerwünschte Zerkleinerung der nicht-faserigen Bestandteile des Altpapiers; so daß sich diese später beim Sortieren schlechter abtrennen lassen; außerdem kann nur mit einer Stoffdichte gearbeitet werden, die entweder für das Auflösen zu gering oder für das Sortieren zu groß ist.

Aus Kostengründen ist man nun stets bestrebt, den relativ hohen Energieaufwand für die Rückgewinnung brauchbarer Fasern aus Fasermaterial, wie Altpapier, so klein wie möglich zu halten, weshalb der Erfindung die Aufgabe zugrunde lag, das an erster Stelle beschriebene bekannte System der Firma Hermann Finckh Maschinenfabrik GmbH & Co. so zu verbessern, daß sich das Fasermaterial mit geringerem Energieaufwand, aber dennoch schonend, auflösen läßt – die wiederverwendbaren Fasern sollen möglichst wenig geschädigt und nichtauflösbares Material soll möglichst wenig zerkleinert werden, damit es sich leicht und möglichst vollständig von den wiederverwendbaren Fasern abtrennen läßt.

Ausgehend von dem bekannten Verfahren der eingangs erwähnten Art läßt sich diese Aufgabe erfindungsgemäß dadurch lösen, daß die Trommel in ihrem Auflöseabschnitt im Querschnitt zu ca. 20% bis zu ca. 60% mit Fasermaterial und Auflöseflüssigkeit gefüllt wird und daß das Fasermaterial durch im Abstand voneinander angeordnete schaufelartige Mitnehmerelemente in axialer Richtung der Trommel unmittelbar aneinandergrenzenden gegenläufigen und ungefähr in Umfangsrichtung der Trommel verlaufenden Materialströmen bewegt und so durch Reib- und Scherkräfte zwischen gegenläufigen Materialströmen aufgelöst wird. Zur Durchführung dieses Verfahrens empfiehlt sich eine Trommel der eingangs erwähnten Art, bei der die Mitnehmerelemente schaufelartig ausgebildet und in axialer und/oder Umfangsrichtung so im Abstand voneinander angeordnet sind, daß sich zwischen den Mitnehmerelementen zumindest ungefähr in Umfangsrichtung verlaufende Gassen ergeben, in denen sich gegenläufige, d.h. sich auf- und abwärts bewegende Fasermaterial-Stoffströme ausbilden, welche unmittelbar aneinandergrenzen, so daß bei gleicher Trommellänge die Zahl derjenigen Zonen, in denen Reib- und Scherkräfte auf das aufzulösende Fasermaterial einwirken, gegenüber der vorstehend an erster Stelle geschilderten bekannten Einweich- und Auflösetrommel der Anmelderin vervielfacht wird. Die Erfindung ermöglicht es also, entweder mit einer kürzeren Trommel zu arbeiten oder zu demselben Auflöseergebnis wie mit der an erster Stelle beschriebenen bekannten Entweich- und Auflösetrommel mit geringerem Energieaufwand zu kommen oder bei gleichem Energieaufwand das Fasermaterial vollständiger aufzulösen.

Bei dem erfindungsgemäßen Verfahren werden die erwähnten Reib- und Scherkräfte in besonders hohem Maße im Bereich der Kanten der schaufelartigen Mitnehmerelemente erzeugt, woraus die Überlegenheit der Erfindung über den Stand der Technik mit geraden Mitnehmerrippen ersichtlich wird.

Wenn vorstehend davon die Rede war, daß die Materialströme in axialer Richtung der Trommel aneinandergrenzen, so bedeutet dies nicht, daß nur in axialer Richtung aneinandergrenzende, gegenläufige Materialströme auftreten. Auch muß der axiale Trommelabschnitt mit geschlossenem Trommelmantel und Mitnehmerelementen der Beschickungsöffnung der Trommel nicht unmittelbar benachbart sein. Schließlich sei darauf hingewiesen, daß schaufelartig ausgebildete Mitnehmerelemente auch dadurch entstehen können, daß eine stegartige Mitnehmerrippe mit Ausnehmungen versehen wird, so daß die Bereiche zwischen diesen Ausnehmungen eine Art von Mitnehmerschaufeln bilden.

Um bei gleichen Trommelabmessungen einen besonders intensiven Auflöseeffekt zu erzielen, sind bei einer bevorzugten Ausführungsform der erfindungsgemäßen Trommel die schaufelartigen Mitnehmerelemente so angeordnet, daß die erwähnten Gassen zwischen den Mitnehmerelementen schlangenlinienförmig verlaufen. Dies läßt sich insbesondere dadurch erreichen, daß zumindest ungefähr in Umfangsrichtung verlaufende Reihen von schaufelartigen Mitnehmerelementen vorgesehen werden, wobei die letzteren innerhalb der Reihen im Abstand voneinander angeordnet sind, und daß die Mitnehmerelemente einer jeden Reihe gegenüber den Mitnehmerelementen der benachbarten Reihen in Umfangsrichtung versetzt sind, insbesondere um den halben Abstand der Mitnehmerelemente innerhalb einer Reihe. Dabei lässt sich ein stark zickzack-förmiger Verlauf dadurch erreichen, daß, in Umfangsrichtung gesehen, die Mitnehmerelemente einander benachbarter Reihen zumindest nahezu abstandslos angeordnet sind, so daß die Materialströme zum Ausweichen um die Mitnehmerelemente herum gezwungen werden.

Um in demjenigen axialen Trommelabschnitt, in dem die Auflöseflüssigkeit mit dem Fasermaterial gemischt und von diesem erst aufgesogen werden soll, d.h. insbesondere etwa im ersten Drittel der Trommel, die Auflöseflüssigkeit in axialer Richtung zu stauen, sowie erforderlichenfalls zur Aussteifung der Trommel wird empfohlen, die Trommel so auszubilden, daß zumindest ein Teil der von den schaufelartigen Mitnehmerelementen gebildeten Reihen einen von der Trommelwand in radialer Richtung in das Trommelinnere hinein vorspringenden Stau- und/oder Verstärkungsring aufweist, welcher die schaufelartigen Mitnehmerelemente der betreffenden Reihe durchsetzt. Auf diese Weise kann dieser Ring seine Funktion erfüllen, ohne das Entstehen der erwünschten Reib- und Scherkräfte zu behindern.

Besonders vorteilhaft ist es, wenn die Summe der wirksamen Kanten der schaufelartigen Mitnehmerelemente um ein Vielfaches grösser ist als die Summe der Kantenlängen der Mitnehmerrippen der bekannten Auflösetrommeln. Dies bedeutet mit anderen Worten, daß die Summe der dem Trommelinnern zugewandten Kanten der Mitnehmerelemente ein Vielfaches (vorzugsweise das Zwei- bis Dreifache) derjenigen Länge beträgt, die sich aus der axialen Länge des mit Mitnehmerelementen bestückten Trommelabschnitts, multipliziert mit der Anzahl derjenigen Mitnehmerelemente ergibt, welche längs einer Umfangslinie des Trommelmantels angeordnet sind, d.h. also bei der bevorzugten Ausführungsform eine Reihe von Mitnehmerelementen bilden. Unter den dem Trommelinnern zugewandten Kanten der schaufelartigen Mitnehmerelemente sind dabei natürlich nicht nur die radial innersten Kanten zu verstehen, sondern auch die senkrecht oder schräg zur Trommelwand verlaufenden Kanten dieser Mitnehmerelemente.

Schliesslich empfiehlt es sich, die schaufelartigen Mitnehmerelemente gegenüber der Trommelachse derart schräg zu stellen, daß sich bei drehender Trommel ein Fördereffekt in Richtung zur Auslassöffnung ergibt. Auf diese Weise lassen sich die Neigung der Trommelachse und damit die aufzufangenden Axialkräfte verringern.

Weitere Merkmale, Vorteile und Einzelheiten der Erfindung ergeben sich aus der nachfolgenden Beschreibung sowie der beigefügten zeichnerischen Darstellung zweier bevorzugter Ausführungsformen der erfindungsgemässen Auflösetrommel; in der Zeichnung zeigen:

Figur 1 einen Axialschnitt durch die erste Ausführungsform;

Figur 2 eine Abwicklung eines Teils des Trommelmantels der zweiten Ausführungsform, vom Trommelinnern her gesehen;

Figur 3 einen Schnitt durch die Trommel der ersten Ausführungsform senkrecht zu deren Achse, und

Figur 4 einen Schnitt nach der Linie 4-4 in Figur 3.

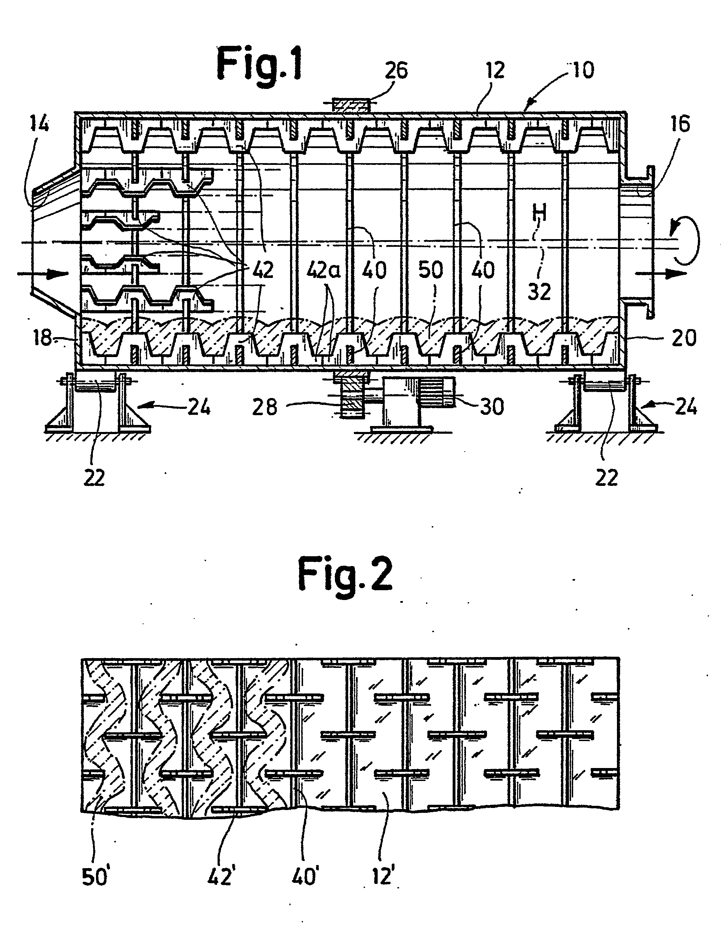

Die Figur 1 lässt erkennen, daß eine als Ganzes mit 10 bezeichnete Einweich- und Auflösetrommel einen geschlossenen Mantel 12 und zwei bis auf eine Beschickungsöffnung 14 und eine Auslassöffnung 16 geschlossene Stirnwände 18 und 20 besitzt. Die Trommel ruht mit ihrem Mantel 12 auf einem vorderen und einem hinteren Rollenpaar, von denen jeweils nur eine einzige Rolle 22 dargestellt wurde, die in einem Gestell 24 drehbar gelagert ist. Auf der Aussenseite des Trommelmantels 12 ist ein Zahnring 26 befestigt, in den ein Ritzel 28 eines Antriebsmotors 30 eingreift.

Erfindungsgemäss ist die Achse 32 gegenüber der Horizontalen H über einige wenige Winkelgrade geneigt, und zwar mit Gefälle zur Auslassöffnung 16.

Mit Vorteil werden auf der Innenseite des Trommelmantels 12 stegförmige Ringe 40 befestigt, die in Umfangsrichtung der Trommel verlaufen und insbesondere in gleichen axialen Abständen voneinander angeordnet sind. Mit diesen Ringen lässt sich die Trommel versteifen. Sie dienen aber auch noch einem weiteren Zweck, der später noch zu erläutern sein wird. Auf diese Ringe aufgesetzt, jedoch gleichfalls am Trommelmantel 12 angeordnet sind schaufelartige Mitnehmerelemente 42, die z.B. rechteckig sein oder Dreiecksform haben können, bevorzugt jedoch trapezförmig mit einem stegförmigen Fuss 42a ausgebildet werden. Längs eines Rings 40 bilden diese Mitnehmerelemente also eine Reihe, in der sie äquidistant angeordnet sind. Wie die Figur 1 erkennen lässt, stossen bei der ersten Ausführungsform einander benachbarte Mitnehmerelemente einander benachbarter Reihen unmittelbar aneinander. Diese Mitnehmerelemente sollen, wie zeichnerisch nicht dargestellt werden konnte, gegenüber der axialen Richtung leicht so geneigt sein, daß sich bei rotierender Trommel ein Fördereffekt in Richtung zur Auslassöffnung 16 ergibt.

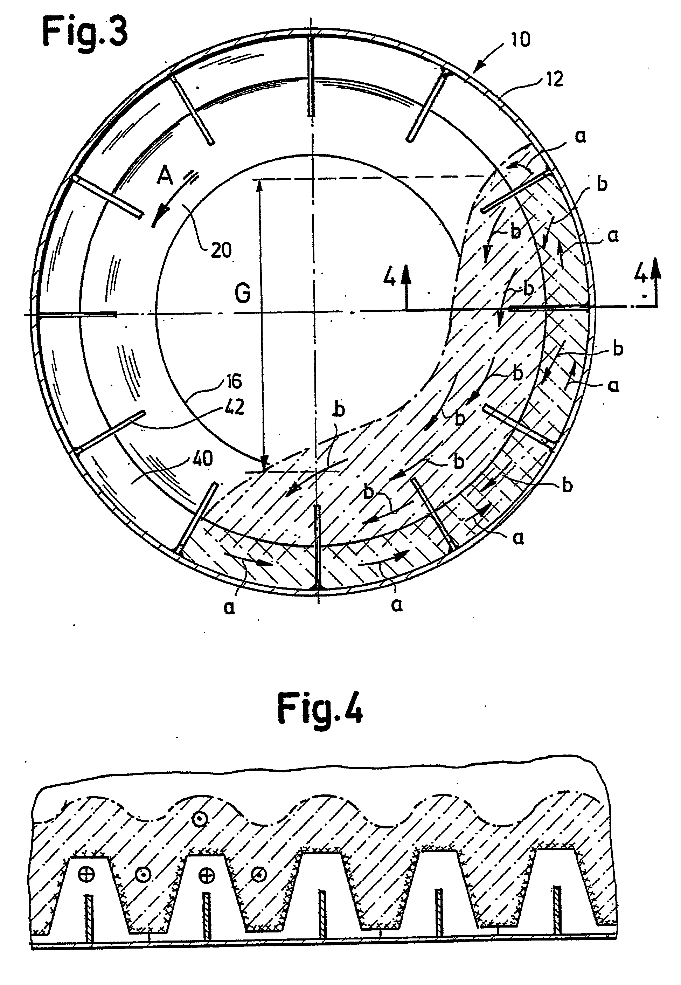

Einzelheiten der Konstruktion der ersten Ausführungsform ergeben sich auch aus den Figuren 3 und 4.

Durch die Beschickungsöffnung 14 wird nun die rotierende Trommel 10 kontinuierlich mit gemischtem Altpapier und Auflöseflüssigkeit beschickt, wobei es sich bei der Auflöseflüssigkeit um Wasser, gegebenenfalls mit chemischen Zusätzen, handeln kann. Dreht sich die Trommel 10 in Richtung des in Figur 3 eingezeichneten Pfeils "A", so wird das zu behandelnde Material durch die Mitnehmerelemente 42 über einen gewissen Winkel, z.B. 60 bis 70°, in Drehrichtung mitgenommen und dabei angehoben, und zwar im Bereich zwischen den Mitnehmerelementen 42, so wie dies in Figur 3 mit den Pfeilen "a" angedeutet wurde. Das angehobene Material bewegt sich dann zwischen und über (radial innerhalb) den Mitnehmerelementen 42 wieder nach unten, was in Figur 3 vor und hinter den Ringen 40 sowie über den Mitnehmerelementen 42 mit den Pfeilen "b" angedeutet wurde. Die Geschwindigkeit, mit der das zu behandelnde Material zwischen den Mitnehmerelementen 42 angehoben wird, entspricht zumindest im wesentlichen der Trommelumfangsgeschwindigkeit, und nach dem Anheben fliesst das zu behandelnde Material mit einer Gefällhöhe "G" entgegen der Drehrichtung der Trommel nach unten, wobei die erwähnten Reib- und Scherkräfte entstehen, und zwar insbesondere an den freien Kanten der Mitnehmerelemente 42.

Zur Verdeutlichung wurde in Figur 1 nur das zwischen und über den Mitnehmerelementen 42 entgegen der Trommeldrehrichtung zurückfliessende Material dargestellt und mit 50 bezeichnet, während in Figur 4 die üblichen Pfeildarstellungen gewählt wurden, um die Bewegungsrichtungen des zwischen den Mitnehmerelementen einer Mitnehmerelement-Reihe befindlichen anzuhebenden Materials und des zwischen und über den Mitnehmerelement-Reihen entgegen der Trommeldrehrichtung zurückfliessenden Materials zu bezeichnen (ein Kreis mit einem Kreuz bedeutet Bewegung in die Zeichnungsebene hinein, ein Kreis mit einem Punkt Bewegung aus der Zeichnungsebene heraus dem Betrachter entgegen).

Die in Figur 2 in Form einer teilweisen Abwicklung der Trommelwand, von innen gesehen, dargestellte zweite Ausführungsform unterscheidet sich von der ersten Ausführungsform nur in der Anordnung der Mitnehmerelemente, so daß nur die Unterschiede erläutert werden. Als Bezugszeichen wurden dieselben Bezugszeichen wie in den Figuren 1 bis 4 verwendet, jedoch unter Hinzufügung eines Strichs.

Bei dieser bevorzugten Ausführungsform sind die einem Ring 40' zugeordneten Mitnehmerelemente 42' gegenüber den Mitnehmerelementen der benachbarten Ringe in Umfangsrichtung um den halben Abstand der Mitnehmerelemente einer durch einen Ring definierten Reihe versetzt, so daß sich für das entgegen der Trommeldrehrichtung zurückfliessende Material 50' zickzackförmige Gassen zwischen den Mitnehmerelementen bilden. Die einander benachbarten Ringen 40' zugeordneten Mitnehmerelemente 42' können bei dieser Ausführungsform in axialer Richtung näher beieinanderliegen als bei der ersten Ausführungsform nach Figur 1 bzw. sich - in Umfangsrichtung gesehen - in axialer Richtung sogar etwas überlappen.

**Patentansprüche**

1. Verfahren zum Auflösen von Fasermaterial, insbesondere von gemischtem Altpapier, in einer sich mit liegender Achse drehenden Trommel, der das aufzulösende Fasermaterial durch eine in einer ersten Trommelstirnwand angeordnete Beschickungsöffnung zugeführt und dann in einem Auflöseabschnitt der Trommel in dieser zusammen mit Auflöseflüssigkeit durch einem geschlossenen Trommelmantel benachbarte Mitnehmerelemente der Trommel in deren aufsteigendem Bereich periodisch angehoben und dadurch mit der Auflöseflüssigkeit gemischt und aufgelöst wird, worauf eine Fasersuspension und nicht-aufgelöstes Material durch eine in der zweiten Trommelstirnwand angeordnete Auslaßöffnung aus der Trommel abgeführt werden, dadurch gekennzeichnet, daß die Trommel in ihrem Auflöseabschnitt im Querschnitt zu ca. 20% bis zu ca. 60% mit Fasermaterial und Auflöseflüssigkeit gefüllt wird und daß das Fasermaterial durch im Abstand voneinander angeordnete schaufelartige Mitnehmerelemente in in axialer Richtung der Trommel unmittelbar aneinandergrenzenden, gegenläufigen und ungefähr in Umfangsrichtung der Trommel verlaufenden Materialströmen bewegt und so durch Reib- sowie Scherkräfte zwischen gegenläufigen Materialströmen aufgelöst wird.

2. Trommel zur Durchführung des Verfahrens nach Anspruch 1, mit einer um eine liegende Achse (32) drehbar gelagerten Trommel (10) mit einer Beschickungsöffnung (14) in einer ersten (18) und einer Auslaßöffnung (16) in einer zweiten Stirnwand (20) sowie einem zumindest in einem der Beschickungsöffnung (14) benachbarten axialen Trommelabschnitt geschlossenen Trommelmantel (12), an dessen Innenseite Mitnehmerelemente (42) zum Anheben des Fasermaterials angeordnet sind, dadurch gekennzeichnet, daß die Mitnehmerelemente (42) schaufelartig ausgebildet und in axialer und/oder Umfangsrichtung so im Abstand voneinander angeordnet sind, daß sich zwischen den Mitnehmerelementen (42) zumindest ungefähr in Umfangsrichtung verlaufende Gassen (bei 50) ergeben.

3. Trommel nach Anspruch 2, dadurch gekennzeichnet, daß die Gassen (bei 50') schlangenlinienförmig verlaufen.

4. Trommel nach Anspruch 2, dadurch gekennzeichnet, daß zumindest ungefähr in Umfangsrichtung verlaufende Reihen von Mitnehmerelementen (42) vorgesehen sind, daß die Mitnehmerelemente (42) innerhalb der Reihen im Abstand voneinander angeordnet sind und daß, in Umfangsrichtung gesehen, zwischen den Mitnehmerelementen (42) einander benachbarter Reihen ein axialer Abstand vorgesehen ist.

5. Trommel nach Anspruch 3, dadurch gekennzeichnet, daß zumindest ungefähr in Umfangsrichtung verlaufende Reihen von Mitnehmerelementen (42') vorgesehen sind, daß die Mitnehmerelemente (42') innerhalb der Reihen im Abstand voneinander angeordnet sind und daß die Mitnehmerelemente (42') einer jeden Reihe gegenüber den Mitnehmerelementen (42') der benachbarten Reihen in Umfangsrichtung versetzt sind, insbesondere um den halben Abstand der Mitnehmerelemente (42') innerhalb einer Reihe.

6. Trommel nach Anspruch 5, dadurch gekennzeichnet, daß, in Umfangsrichtung gesehen, die Mitnehmerelemente (42') einander benachbarter Reihen zumindest nahezu abstandslos angeordnet sind.

7. Trommel nach Anspruch 4 oder 5, dadurch gekennzeichnet, daß zumindest ein Teil der Reihen einen von der Trommelwand (12) in radialer Richtung in das Trommelinnere hinein vorspringenden Verstärkungs- und Stauring (40) aufweist, welcher die schaufelartigen Mitnehmerelementen (42; 42') der betreffenden Reihe durchsetzt.

8. Trommel nach einem oder mehreren der Ansprüche 2 bis 7, dadurch gekennzeichnet, daß die Summe der dem Trommelinnern zugewandten Kanten der Mitnehmerelemente (42; 42') ein Vielfaches und vorzugsweise das zwei- bis dreifache derjenigen Länge beträgt, die sich aus der axialen Länge des mit Mitnehmerelementen (42; 42') bestückten Trommelabschnitts, multipliziert mit der Anzahl derjenigen Mitnehmerelemente (42; 42') ergibt, welche längs einer Umfangslinie des Trommelmantels (12) angeordnet sind.

9. Trommel nach einem oder mehreren der Ansprüche 2 bis 8, dadurch gekennzeichnet, daß die schaufelartigen Mitnehmerelemente (42; 42') gegenüber der Trommelachse (32) derart schräg gestellt sind, daß sich ein Fördereffekt in Richtung zur Auslaßöffnung (16) ergibt.

10. Trommel nach einem oder mehreren der Ansprüche 2 bis 9, dadurch gekennzeichnet, daß die Trommelachse (32) ein Gefälle in Richtung zur Auslaßöffnung (16) aufweist.

## Claims

1. Process for dissolving fibrous material, particularly mixed waste paper, in a drum rotating about a substantially horizontal axis, said drum being supplied with the fibrous material to be dissolved through a feed opening arranged in a first drum end wall and said fibrous material then being periodically lifted in a dissolving section of said drum together with dissolving liquid by means of entrainment members of said drum in their ascending region, said entrainment members adjoining a closed drum casing, said fibrous material hereby being mixed with said dissolving liquid and dissolved, whereupon a fibrous suspension and non-dissolved material are discharged from the drum through an outlet opening arranged in the second drum end wall, characterized in that said drum in its dissolving section is filled in cross section to between approximately 20% and approximately 60% with fibrous material and dissolving liquid and that said fibrous material is moved by spaced, blade-like entrainment members in countercurrent streams of material extending approximately in the circumferential direction of the drum and being immediately adjacent one another in the axial direction of the drum, said fibrous material thereby being dissolved due to frictional and shearing forces between countercurrent streams of material.

2. A drum for carrying out the process defined in claim 1, comprising a drum (10) mounted for rotation about a substantially horizontal axis (32) and having a feed opening (14) in a first end wall (18) and a discharge opening (16) in a second end wall (20) as well as a drum casing (12) closed at least in an axial drum section adjacent said feed opening (14), entrainment members (42) being arranged on the inside of said drum casing for lifting said fibrous material, characterized in that said entrainment members (42) are designed in the shape of blades and spaced from one another in the axial and/or circumferential direction such that passageways (at 50) extending at least approximately in the circumferential direction result between said entrainment members (42).

3. Drum as defined in claim 2, characterized in that said passageways (at 50') extend in sinuous lines.

4. Drum as defined in claim 2, characterized in that rows of entrainment members (42) extending at least approximately in the circumferential direction are provided, that said entrainment members (42) are spaced from one another within said rows and that, when seen in the circumferential direction, an axial space is provided between the entrainment members (42) of adjacent rows.

5. Drum as defined in claim 3, characterized in that rows of entrainment members (42') extending at least approximately in the circumferential direction are provided, that said entrainment members (42') are spaced from one another within said rows and that the entrainment members (42') of each row are offset in the circumferential direction relative to the entrainment members (42') of the adjacent rows, in particular by half the space between the entrainment members (42') within one row.

6. Drum as defined in claim 5, characterized in that, when seen in the circumferential direction, the entrainment members (42') of adjacent rows are arranged at least almost without any space therebetween.

7. Drum as defined in claim 4 or 5, characterized in that at least some of said rows have a reinforcing baffle ring (40) projecting in radial direction from the drum wall (12) into the interior of the drum and penetrating the blade-like entrainment members (42; 42') of the relevant row.

8. Drum as defined in any or several of claims 2 to 7, characterized in that the sum of the edges of said entrainment members (42; 42') facing the interior of the drum is a multiple of and preferably two to three times the length resulting from the axial length of the drum section equipped with entrainment members (42; 42') multiplied by the number of those entrainment members (42; 42') arranged along a circumferential line of said drum casing (12).

9. Drum as defined in any or several of claims 2 to 8, characterized in that said blade-like entrainment members (42; 42') are inclined relative to the drum axis (32) such that this results in a conveying effect in the direction towards the discharge opening (16).

10. Drum as defined in any or several of claims 2 to 9, characterized in that said drum axis (32) is inclined in the direction towards said discharge opening (16).

## Revendications

1. Procédé pour la désintégration d'une matière fibreuse, en particulier de mélanges de vieux papiers, dans un tambour rotatif à axe horizontal, dans lequel la matière fibreuse à désintégrer est admise par un orifice d'alimentation prévu dans une première paroi d'about du tambour, puis, dans une section de désintégration du tambour, elle est soulevée, conjointement avec du liquide de désintégration, par des éléments entraîneurs adjacents à une enveloppe de tambour imperforée, périodiquement dans leur région montante, et est ainsi mélangée au liquide de désintégration et désintégrée, après quoi une suspension de fibres et de matière non désintégrée est évacuée du tambour par un orifice de sortie prévu dans la seconde paroi d'about du tambour, caractérisé en ce que le tambour, dans sa section de désintégration, est rempli, en coupe, d'environ 20% jusqu'à environ 60% de matière fibreuse et de liquide de désintégration et que la matière fibreuse est déplacée par des éléments entraîneurs en forme de palettes, disposés à distance les uns des autres, en des courants de matière directement adjacents l'un à l'autre dans le sens axial du tambour, s'écoulant en sens opposés et à peu près dans le sens périphérique du tambour et est ainsi désintégrée par des forces de frottement et de cisaillement entre des courants de matière s'écoulant en sens opposés.

2. Tambour pour l'exécution du procédé suivant la revendication 1, comprenant un tambour (10) monté à rotation autour d'un axe horizontal (32) et comportant un orifice d'alimentation (14) dans une première paroi d'about (18) et un orifice de sortie (16) dans une deuxième paroi d'about (20), ainsi qu'une enveloppe de tambour (12) imperforée au moins dans une section axiale voisine de l'orifice d'alimentation, des éléments entraîneurs (42) destinés à soulever la matière fibreuse étant montés sur la face interne de l'enveloppe du tambour, caractérisé en ce que les éléments entraîneurs (42) ont la forme de palettes et sont espacés l'un de l'autre dans le sens axial et/ou dans le sens périphérique, de telle façon que des passages (en 50), qui s'étendent au moins approximativement dans le sens circonférentiel, soient formés entre les éléments entraîneurs (42).

3. Tambour suivant la revendication 2, caractérisé en ce que les passages (en 50') sont de forme sinueuse.

4. Tambour suivant la revendication 2, caractérisé en ce que des rangées d'éléments entraîneurs (42), qui s'étendent au moins approximativement dans le sens circonférentiel, sont prévues, que les éléments entraîneurs (42) sont disposés à distance l'un de l'autre dans les rangées et que, vu dans le sens circonférentiel, entre les éléments entraîneurs (42) de rangées voisines, est prévue une distance axiale.

5. Tambour suivant la revendication 3, caractérisé en ce que des rangées d'éléments entraîneurs (42'), qui s'étendent au moins approximativement dans le sens circonférentiel, sont prévues, que les éléments entraîneurs (42') sont disposés à distance l'un de l'autre dans les rangées et que les éléments entraîneurs (42') de chaque rangée sont décalés dans le sens circonférentiel par rapport aux éléments entraîneurs (42') des rangées voisines, en particulier de la moitié de l'espacement des éléments entraîneurs (42') dans une rangée.

6. Tambour suivant la revendication 5, caractérisé en ce que, vu dans le sens circonférentiel, les éléments entraîneurs (42') de rangées voisines sont disposés au moins à peu près sans espacement.

7. Tambour suivant la revendication 4 ou 5, caractérisé en ce qu'au moins une partie des rangées présente un anneau de retenue et de renforcement (40) qui fait saillie radialement à l'intérieur du tambour à partir de sa paroi (12), cet anneau traversant les éléments entraîneurs en forme de palettes (42; 42') de la rangée en question.

8. Tambour suivant l'une quelconque des revendications 2 à 7, caractérisé en ce que la somme des bords des éléments entraîneurs (42; 42'), tournés vers l'intérieur du tambour, est un multiple et, de préférence, le double ou le triple de la longueur qui est obtenue à partir de la longueur axiale de la section de tambour garnie des éléments entraîneurs (42; 42') multipliée par le nombre des éléments entraîneurs (42; 42') qui sont disposés le long d'une ligne circonférentielle de l'enveloppe de tambour (12).

9. Tambour suivant l'une quelconque des revendications 2 à 8, caractérisé en ce que les éléments entraîneurs en forme de palettes (42; 42') sont montés obliquement par rapport à l'axe (32) du tambour, de telle sorte que l'on obtienne un effet d'acheminement en direction de l'orifice de sortie (16).

10. Tambour suivant l'une quelconque des revendications 2 à 9, caractérisé en ce que l'axe (32) du tambour présente une déclivité en direction de l'orifice de sortie (16).

# Fig.1

# Fig.2

EP 0 218 738 B1

# Fig.3

# Fig.4